# EUROPÄISCHE PATENTSCHRIFT

(11) **EP 2 808 233 B1**
(45) Veröffentlichungstag und Bekanntmachung des Hinweises auf die Patenterteilung: **14.03.2018**
(21) Anmeldenummer: 14000187.6
(22) Anmeldetag: 18.01.2014
(51) Int. Cl.: B62D 33/06, B60G 17/0165, B60G 17/016, B60G 17/052

(54) **System und Betriebsverfahren zur Niveauregelung eines Fahrerhauses eines Nutzfahrzeugs gegenüber dem Fahrzeugchassis**
System and operation method for level adjustment of a driver's cab of a commercial vehicle relative to the vehicle chassis
Système et procédé de fonctionnement pour la régulation du niveau d'une cabine de conducteur d'un véhicule utilitaire par rapport au châssis du véhicule

(30) Priorität: 31.05.2013 DE 102013009204
(43) Veröffentlichungstag der Anmeldung: 03.12.2014
(73) Patentinhaber: MAN Truck & Bus AG, 80995 München (DE)
(72) Erfinder: Rausch, Ludwig, 80798 München (DE); Gunzert, Urs, 85241 Hebertshausen (DE); Fleischhacker, Jan, 82140 Olching (DE)
(74) Vertreter: v. Bezold & Partner Patentanwälte - PartG mbB

(56) Entgegenhaltungen:
- EP-A1- 1 724 131
- EP-A2- 0 089 794
- EP-A2- 1 584 545
- WO-A1-98/56642
- WO-A1-99/24309
- JP-A- H06 286 649
- JP-A- H07 156 838
- JP-A- 2013 100 029
- US-A- 5 083 275
- US-A1- 2001 044 685
- US-A1- 2004 227 050

## Beschreibung

### Geänderte Beschreibung

Die Erfindung betrifft ein System zur Niveauregelung eines Fahrerhauses eines Nutzfahrzeugs gegenüber einem Fahrzeugchassis. Die Erfindung betrifft weiterhin ein Betriebsverfahren zur Niveauregelung eines Fahrerhauses eines Nutzfahrzeugs gegenüber dem Fahrzeugchassis.

Aus dem Stand der Technik sind Feder- bzw. Dämpfungsmechanismen bekannt, um das Fahrerhaus eines Nutzfahrzeugs federnd auf dem Fahrzeugchassis zu lagern. Dadurch kann der Fahrer des Nutzfahrzeugs besser vor fahrbahnbedingten Erschütterungen, beispielsweise durch Bodenwellen oder Schlaglöcher, geschützt werden. Um auch bei starken fahrbahnbedingten Erschütterungen eine gute Dämpfungswirkung und einen hohen Dämpfungskomfort zu erzielen, ist ein möglichst langer Federweg wünschenswert. Ein langer Federweg bedingt jedoch einen großen Spalt zwischen Fahrerhaus und Chassis sowie eine entsprechend größere Bauhöhe des Nutzfahrzeugs. Dies verschlechtert den c_{W}-Wert und damit den Kraftstoffverbrauch des Nutzfahrzeugs. Derartige Systeme sind daher in unzureichender Weise geeignet, sowohl einen hohen Federungskomfort als auch einen effizienten Kraftstoffverbrauch zu ermöglichen und das Feder- bzw. Dämpfungssystem an die im reellen Straßenverkehr auftretenden verschiedensten Verkehrs- und Fahrsituationen anzupassen.

Bei einem aus dem Stand der Technik bekannten Feder- bzw. Dämpfungsmechanismus werden Luftfederbeine eingesetzt, die sich über eine interne oder externe Hebelanlage und Ventile selbst ausnivellieren und auf diese Weise einen fixen, nicht beeinflussbaren Abstand zwischen Fahrerhaus und Fahrzeugchassis einstellen. Bei diesem Federmechanismus wird, wenn sich das Fahrerhaus aufgrund von Anregungen aus dem Untergrund oder anderer Einflüsse relativ zum Chassis bewegt, durch einen am Federbein befestigten oder internen Hebel ein Ventil betätigt, so dass bei Bewegungen des Federbeins permanent Luft in die Umgebung abgelassen oder Luft ins Federbein gepumpt wird sobald die Sollposition verlassen wird. Nachteilig an diesem Federmechanismus ist der durch das permanente Luftein- und - auslassen bedingte hohe Luftverbrauch.

Aus der JP 2013 100029 A ist ein Verfahren bekannt, bei dem das Fahrerhaus eines Nutzfahrzeugs bei Überschreiten eines Geschwindigkeitsschwellenwerts auf ein niedrigeres Soll-Niveau abgesenkt wird, um den Luftwiderstand zu senken. Ferner ist aus der EP 1 724 131 A1 eine Vorrichtung und Verfahren zur Federung einer Fahrzeugkabine mittels Luftfeder und Zusatzvolumina bekannt, wobei bei vorbestimmbaren Geschwindigkeiten oder Beschleunigungswerten einer Federbewegung der Luftfeder mittels der Steuereinrichtung das zu- oder abführbare Zusatzvolumen derart zu- oder abschaltbar ist, dass in Hubendbereichen die Luftfeder der Verlauf einer Kraft-Weg-Luftfederkennlinie während einer Ausstell- oder Rückstellfederbewegung der Luftfeder in einem ersten und in einem zweiten Bereich keine Steigung aufweist. Aus der US 2004/227050 A1 ist bekannt, die Federkennlinie einer Federeinrichtung eines Fahrzeugsitzes durch Anpassung des Luftvolumens zu verändern.

Eine Aufgabe der Erfindung ist es, eine Fahrerhauslagerung eines Nutzfahrzeugs bereitzustellen, die sowohl einen hohen Dämpfungskomfort aufweist als auch einen effizienten Betrieb des Kraftfahrzeugs ermöglicht.

Die vorstehend beschriebene Aufgabe wird durch ein System und ein Betriebsverfahren zur Niveauregelung eines Fahrerhauses eines Nutzfahrzeugs gegenüber einem Fahrzeugchassis gemäß der unabhängigen Ansprüche gelöst. Bevorzugte Ausführungsbeispiele der Erfindung werden in den abhängigen Ansprüchen beschrieben.

Gemäß der vorliegenden Erfindung umfasst das System zur Niveauregelung eines Fahrerhauses eines Nutzfahrzeugs gegenüber einem Fahrzeugchassis eine gefederte Lagerung, um das Fahrerhaus federnd auf dem Fahrzeugchassis zu lagern, sowie ein Abstandssensormittel, das eingerichtet ist, Relativbewegungen und/oder einen Abstand zwischen Fahrerhaus und Fahrzeugchassis zu erfassen. Unter Fahrerhaus wird der Teil des Aufbaus des Fahrzeugs verstanden, der den Raum für Fahrzeugführer und Begleitpersonen bildet. Das Fahrzeugchassis wird nachfolgend auch als Chassis oder Fahrgestell bezeichnet.

Das System umfasst ein Steuermittel, das zur variablen Ansteuerung der gefederten Lagerung eingerichtet ist, wobei Signale des Abstandssensormittels zur Ansteuerung der gefederten Lagerung verwendet werden. Weiterhin ist die gefederte Lagerung auf eine erste Höhenposition einstellbar, so dass der Abstand zwischen Fahrerhaus und Fahrzeugchassis durch das Steuermittel auf einen ersten Sollabstand gesteuert wird.

Hierzu ist das Steuermittel eingerichtet, anhand der empfangenen Signale des Abstandssensormittels zu erkennen, ob sich eine Abweichung des Abstands zwischen Fahrerhaus und Chassis vom Sollabstand bzw. aus der Nulllage, beispielsweise durch eine Fahrbahnunebenheit, wieder auf den Sollabstand bzw. die Nulllage einfedert oder nicht. Erkennt das Steuermittel eine dauerhafte bzw. eine nicht durch die normale Federbewegung bedingte Abweichung von der Solllage, kann das Steuermittel zur Wiederherstellung des Sollabstands regelnd eingreifen. In vergleichbarer Weise kann eine Abweichung von der parallelen Ausrichtung des Fahrerhauses zum Chassis, beispielsweise durch das Gewicht eines Fahrers, wodurch sich das Fahrerhaus an einer Stelle leicht absenkt, mittels des Abstandssensormittels erfasst und durch Ansteuerung der gefederten Lagerung entsprechend korrigiert werden.

Gemäß der vorliegenden Erfindung ist die gefederte Lagerung zusätzlich oder alternativ auf zumindest eine zweite Höhenposition einstellbar, so dass der Abstand zwischen Fahrerhaus und Fahrzeugchassis durch das Steuermittel auf einen zweiten Sollabstand gesteuert wird. Mit anderen Worten ist die gefederte Lagerung höhenverstellbar in zumindest zwei vorgegebene Höhenpositionen. Eine veränderte Höhenposition der gefederten Lagerung verändert den (Soll-)Abstand zwischen Fahrerhaus und Chassis und damit die vorbestimmte Nulllage, um die das Fahrerhaus relativ zum Chassis federn kann.

Hierbei wird die gefederte Lagerung vom Steuermittel auf die erste oder auf die zumindest eine zweite Höhenposition in Abhängigkeit von zumindest einem Parameter betreffend eine Fahrstrecke eingestellt, wobei der zumindest eine Parameter betreffend die Fahrstrecke den Straßentyp umfasst, der anhand von GPS-Daten ermittelt wird. Ferner kann die gefederte Lagerung vom Steuermittel auf die erste oder auf die zumindest eine zweite Höhenposition in Abhängigkeit von einem Parameter betreffend einen Fahrzustand des Nutzfahrzeugs eingestellt werden. Ein besonderer Vorzug der Erfindung liegt somit darin, dass die Fahrerhausfederung an die aktuellen Fahrumstände angepasst werden kann, um je nach Fahrsituation diejenige Höhenposition der gefederten Lagerung auszuwählen, die den bestmöglichen Kompromiss aus erforderlichem Federungskomfort und niedrigem Kraftstoffverbrauch ermöglicht.

Ein Beispiel für einen Parameter betreffend die Fahrstrecke kann der aktuelle Straßentyp sein, so dass die Höhenposition der gefederten Lagerung abhängig davon geändert werden kann, ob das Fahrzeug beispielsweise gerade auf einer Autobahn, einer Landstraße, oder einer unbefestigten Strasse fährt. Dies hat den Vorteil, dass bei Straßentypen, bei denen vermehrt mit Straßenunebenheiten, Schlaglöchern etc. zu rechnen ist, die gefederte Lagerung auf die größere Höhenposition eingestellt werden kann, um dadurch den Federweg zu vergrößern und den Federungskomfort zu erhöhen.

Wird dagegen der aktuelle Fahrbahntyp beispielsweise als eine Autobahn erkannt, bei der die Qualität der Fahrbahnoberfläche in der Regel besser ist, kann die gefederte Lagerung auf eine niedrigere Höhenposition abgesenkt werden, so dass der Abstand zwischen Fahrerhaus und Chassis auf eine kleinere Sollhöhe eingeregelt wird. Bei Straßentypen mit guter Fahrbahnoberfläche kann die Federlänge ohne Komforteinbußen verkürzt werden, um den Spalt zwischen Fahrerhaus und Chassis zur Verbesserung des c_{W}-Werts des Fahrzeugs zu verkleinern.

Ein Beispiel für einen Parameter betreffend den Fahrzustand des Nutzfahrzeugs, der für die Einstellung der Höhenposition der gefederten Lagerung benutzt wird, ist die aktuelle Fahrgeschwindigkeit. Das Steuermittel ist vorzugsweise eingerichtet bei Fahrgeschwindigkeit unter einem vorbestimmten Schwellwert eine größere Höhenposition mit längerem Federweg einzustellen und bei Überschreiten des Schwellwerts eine Absenkung auf die niedrigere Höhenposition zu veranlassen und die gefederte Lagerung auf den entsprechend kleineren Sollabstand zu regeln. Erfahrungsgemäß ist die Fahrgeschwindigkeit des Nutzfahrzeugs dann klein, wenn mit stärkeren Erschütterungen oder Anregungen aus dem Untergrund zu rechnen ist. Insbesondere bei hohen Fahrgeschwindigkeiten wirkt sich ein geringerer Abstand zwischen Fahrerhaus und Chassis überproportional stark auf die Kraftstoffeffizienz des Fahrzeugs aus.

Ein weiteres Beispiel für einen möglichen Parameter, auf dessen Basis entschieden werden kann, ob die gefederte Lage auf eine erste Höhenposition oder zumindest eine zweite Höhenposition eingestellt wird, ist die Lenkaktivität des Fahrers. Weitere mögliche Größen aus denen sich ableiten lässt, ob der Federungsbedarf aufgrund der aktuellen Fahrumstände aktuell erhöht oder erniedrigt ist, sind die Querbeschleunigung, die Längsbeschleunigung oder eine Vertikalbeschleunigung des Nutzfahrzeugs, die mittels entsprechender Sensoren erfasst werden können.

Gemäß einer weiteren vorteilhaften Ausgestaltungsform kann auch direkt die Bewegung des Fahrerhauses, beispielsweise mittels des Abstandssensormittels, gemessen werden. Überschreitet die Bewegung des Fahrerhauses einen vorbestimmten Schwellwert, kann dies als Maß für einen erhöhten Federungsbedarf gedeutet werden, so dass in dieser Situation die gefederte Lagerung auf eine Höhenposition mit langem Federweg und großem Sollabstand zwischen Fahrerhaus und Chassis eingestellt wird.

Anhand derartiger Parameter kann beispielsweise durch Verwendung entsprechender experimentell bestimmter Versuchsdaten ermittelt werden, wann ein Umschalten auf eine geänderte Höhenposition der Federung vorteilhaft ist. Die Erfindung ist jedoch nicht auf die Verwendung der zuvor genannten Parameter, wie der Fahrgeschwindigkeit, des Straßentyps oder der Querbeschleunigung beschränkt. So können alternativ oder zusätzlich weitere Parameter verwendet werden, aus denen sich ableiten lässt, ob der Federungsbedarf aufgrund der aktuellen Fahrumstände aktuell erhöht oder erniedrigt ist, um bei reduzierten Federungsbedarf die Höhenposition zur Verbesserung der Kraftstoffeffizienz zu reduzieren.

Vorzugsweise werden die erfassten Werte der vorgenannten Parameter, die kontinuierliche Werte aufweisen, über ein vorbestimmtes Zeitintervall integriert und anschließend bestimmt, ob der integrierte Wert einen vorbestimmten Schwellwert überschreitet, um so eine zuverlässigere Aussage über den aktuellen Federungsbedarf ableiten zu können.

Das System zur Niveauregelung des Fahrerhauses kann so ausgebildet sein, dass die gefederte Lagerung lediglich auf zwei unterschiedliche Höhenpositionen einstellbar ist, so dass zwischen einer "Komfortlage" mit großer Federungshöhe und großem Sollabstand zwischen Fahrzeughaus und Chassis und einer "Aerodynamiklage" mit geringerem Federweg und geringerem Sollabstand zwischen Fahrerhaus und Chassis gewechselt werden kann. Dies ermöglicht eine situativ angepasste Änderung des Federungsverhaltens des Nutzfahrzeugs bei effizienten Kosten.

Bei einer weiteren vorteilhaften Ausgestaltungsform kann die gefederte Lagerung auf eine Vielzahl verschiedener Höhenpositionen einstellbar sein, wobei jede der Höhenpositionen einem vorbestimmten Sollabstand zwischen Fahrzeughaus und Chassis entspricht, auf dessen Einhalten das Steuermittel regelt, nachdem die Höhenposition eingestellt wurde. Es ist darüber hinaus möglich, ein System zur Niveauregelung bereitzustellen, bei dem eine stufenlose Einstellung der Höhenposition der gefederten Lagerung möglich ist. Dies hat den Vorteil, dass die Fahrerhausfederung noch flexibler an die aktuellen Fahrumstände angepasst werden kann, um je nach Fahrsituation die Höhenposition der gefederten Lagerung auszuwählen, die den bestmöglichen Kompromiss aus erforderlichem Federungskomfort und niedrigem Kraftstoffverbrauch ermöglicht.

Ein weiterer Vorzug der Erfindung liegt darin, dass ein "träge" Regelung auf den Sollabstand der eingestellten Höhenposition erfolgt, um ein permanentes Luftein- und -auslassen bei jeder Bewegung der Federelemente aus der Solllage zu vermeiden. Vorzugsweise umfasst die gefederte Lagerung hierfür mehrere pneumatische und/oder hydraulische Federelemente, einen zentralen Ventilblock zur variablen Versorgung der Federelemente mit einem druckerzeugenden Medium und eine Bereitstellungseinheit, die dem Ventilblock das druckerzeugende Medium bereitstellt. Gemäß dieser Ausführungsform ist das Steuermittel als zentrale Steuereinheit ausgebildet. Die zentrale Steuereinheit ist eingerichtet, zu bestimmen, ob sich bei einem Federelement nach einer Abweichung aus der Solllage durch normales "Einfedern" die Solllage wieder einstellt. Falls nicht, wird dies nach einer vorbestimmten Zeit durch Auswertung des Signals des Abstandssensormittels vom der Steuereinheit erfasst. Das Steuermittel kann dann durch Steuerung des zentralen Ventilblocks das Druckniveau dieses Federelementes derart regeln, dass dieses Federelement wieder auf den eingestellten Sollabstand einfedert.

Die "träge" Regelung kann auch realisiert werden, wenn anstelle einer zentralen Steuereinheit als Steuermittel und anstelle eines zentralen Ventilblocks an den Federelementen jeweils ein Ventil und ein Reglerelement vorgesehen sind. Die einzelnen Regler empfangen den zumindest einen Parameter betreffend eine Fahrtstrecke und/oder einen Fahrzustand des Nutzfahrzeugs, um gegebenenfalls die Höhenposition der gefederten Lagerung zu verändern. Die Regler empfangen weiterhin über die Signale eines Abstandssensors eine zu korrigierende Abweichung aus der aktuellen Solllage des jeweiligen Federelements.

Die Regler steuern über das Ventil das Niveau des Druckmediums des Federelements, um dieses auf die Sollhöhenposition bzw. auf den Sollabstand zu regeln.

Vorzugsweise umfasst das Abstandssensormittel Abstandssensoren, beispielsweise Wegaufnehmer, die jeweils die Federbewegung und Ausrichtung der einzelnen Federelemente zwischen Fahrzeughaus und Chassis messen. Vorzugsweise umfasst die gefederte Lagerung mit Druckluft betriebene Federbeine, beispielsweise werden vier Federbeine zur gefederten Lagerung des Fahrerhauses auf dem Chassis vorgesehen.

Sind vier Federbeine zur Lagerung des Fahrerhauses auf dem Fahrgestell vorgesehen, können an jedem oder nur an drei der Federbeine Wegaufnehmer bereitgestellt werden. Drei Messpunkte dreier Abstandssensoren definieren eine Ebene und damit die Ausrichtung des Fahrerhauses relativ zum Chassis. Damit kann auf einen vierten Abstandssensor verzichtet werden.

Ferner kann das Steuermittel eingerichtet sein, den Abstand zwischen Fahrerhaus und Fahrzeugchassis nach erneutem Erreichen einer Umschaltbedingung, beispielsweise nach Unterschreiten eines zuvor überschrittenen Schwellwerts, zur vorherigen Höhenposition zurück zu regeln. Vorzugsweise wird jedoch nur dann auf den ersten bzw. die vorherige Höhenposition zurückgesteuert, wenn nach dem vorherigen Umschalten eine vorbestimmte Totzeit vergangen ist. Dadurch kann vermieden werden, dass bei Schwankungen eines Parameters um die Umschaltbedingung, beispielsweise der Schwankung der Fahrgeschwindigkeit um einen vorbestimmten Grenzwert, eine Hin- und Her-Änderung der Höhenposition der gefederten Lagerung und des Abstandes zwischen Fahrerhauses und Chassis erfolgt.

Die Erfindung erfasst weiterhin ein Betriebsverfahren zur Niveauregelung eines Fahrerhauses eines Nutzfahrzeugs gegenüber einem Fahrzeugchassis, umfassend die Schritte: Erfassen einer Relativbewegung und/oder eines Abstandes zwischen dem Fahrerhaus und dem Fahrzeugchassis; Einstellung einer gefederten Lagerung, die das Fahrerhaus federnd auf dem Fahrzeugchassis lagert, auf eine erste Höhenposition und Steuerung des Abstands zwischen Fahrerhaus und Fahrzeugchassis auf zumindest einen ersten Sollabstand, wobei die erfasste Relativbewegung und/oder der Abstand zwischen dem Fahrerhaus und dem Fahrzeugchassis zur Steuerung auf den ersten Sollabstand verwendet wird. Weiterhin umfasst das Betriebsverfahren das Einstellen der gefederten Lagerung auf zumindest eine zweite Höhenposition und Regelung des Abstands zwischen Fahrerhaus und Fahrzeugchassis auf zumindest einen zweiten Sollabstand, wobei die erfasste Relativbewegung und/oder der Abstand zwischen dem Fahrerhaus und dem Fahrzeugchassis zur Steuerung auf den zweiten Sollabstand verwendet wird. Hierbei erfolgt das Einstellen der gefederten Lagerung auf die erste oder auf die zumindest eine zweite Höhenposition in Abhängigkeit zumindest eines Parameters betreffend eine Fahrstrecke und/oder einen Fahrzustand des Nutzfahrzeugs. Die zuvor beschriebenen Aspekte des Systems gelten auch für das erfindungsgemäße Betriebsverfahren und können mit diesem kombiniert werden, ohne dies explizit nochmals aufzuführen.

Bevorzugte Ausführungsformen der vorliegenden Erfindung werden im Folgenden beispielsweise und exemplarisch unter Bezugnahme auf die beigefügten Zeichnungen näher beschrieben.
- Fig. 1: illustriert beispielhaft eine gefederten Lagerung eines Fahrerhauses auf einem Fahrzeugchassis in einer ersten Höhenposition;
- Fig. 2: zeigt die Lagerung aus Fig. 1 in einer zweiten Höhenposition;
- Fig. 3: zeigt ein schematisches Blockschaltbild eines Systems zur Niveauregelung eines Fahrerhauses gemäß einem Ausführungsbeispiel;
- Fig. 4: zeigt ein schematisches Blockschaltbild eines Systems zur Niveauregelung eines Fahrerhauses gemäß einem weiteren Ausführungsbeispiel; und
- Fig. 5: zeigt ein Ablaufdiagramm zur Illustration der Hauptschritte eines Betriebsverfahrens zur Niveauregelung eines Fahrerhauses gemäß einem Ausführungsbeispiel.

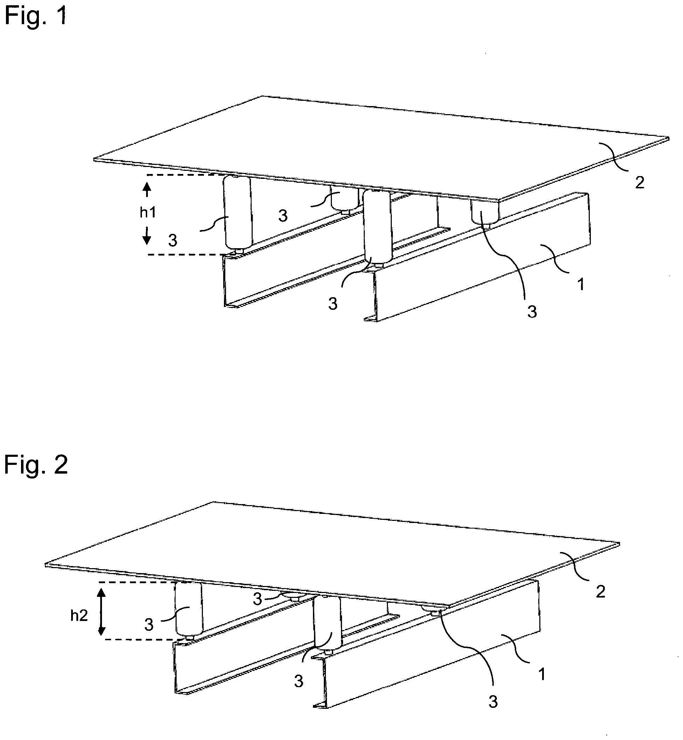

Fig. 1 und Fig. 2 illustrieren eine gefederte Lagerung eines Fahrerhauses 2 (vereinfacht dargestellt als ebene Platte) auf einem Fahrzeugchassis 1 (vereinfacht dargestellt als zwei parallel angeordnete Profilträger). Das Fahrerhaus 2 ist über vier mit Druckluft betriebene Federelemente 3 auf dem Chassis 1 in paralleler Ausrichtung federnd gelagert. Die Federelemente 3 sind höhenverstellbar. Im vorliegenden Ausführungsbeispiel sind die Federelemente 3 in zwei vorgegebene Höhenpositionen h1 und h2 einstellbar, wobei die Höhenposition h1 größer als die Höhenposition h2 ist, was durch Vergleich der Fig. 1 mit der Fig. 2 ersichtlich ist. Eine veränderte Höhenposition h1; h2 der gefederten Lagerung verändert den (Soll-)Abstand zwischen Fahrerhaus (2) und Chassis (1) und damit die vorbestimmte Nulllage, um die das Fahrerhaus (2) relativ zum Chassis (1) bei vertikalen Anregungen federn kann. Die kleinere Höhenposition h2 der gefederten Lagerung in Fig. 2 verkürzt den verfügbaren Federweg. Dies reduziert zwar den Federungskomfort, reduziert jedoch auch den Spalt oder Abstand zwischen Chassis (1) und Fahrerhaus (2).

Im Vergleich zur der in Fig. 1 gezeigten "Komforttage" mit großer Höhenposition h1 der Federn 3 ermöglicht die in Fig. 2 dargestellte "Aerodynamiklage" durch den verkleinerten Spalt bzw. Abstand zwischen Fahrerhaus (2) und Chassis (1) ein besseres Aerodynamikverhalten des Fahrzeugs und dadurch einen reduzierten Kraftstoffverbrauch.

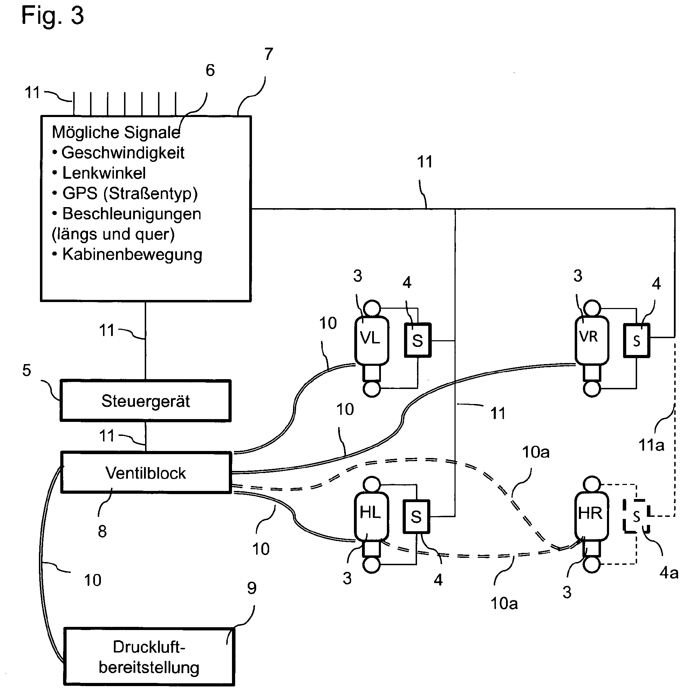

Fig. 3 zeigt ein schematisches Blockschaltbild zur Illustration eines Ausführungsbeispiels der vorliegenden Erfindung.

Die in Fig. 1 gezeigten Federelemente 3 sind in Fig. 3 als vier Federbeine 3 dargestellt, mittels denen das Fahrerhaus (2; nicht gezeigt) federnd auf dem Chassis (1; nicht gezeigt) gelagert ist, wobei sich je ein Federbein 3 am vorderen linken (VL), am vorderen rechten (VR), am hinteren linken (HL) und am hinteren rechten (HR) unteren Endbereich des Fahrerhauses (2) befindet.

Die Federbeine 3 sind auf zwei vorgegebene Höhenpositionen h1, h2 einstellbar. An drei der Federbeine 3 ist ein Wegaufnehmer 4 angeordnet, der die Längenänderungen bzw. die Abweichungen der Federn 3 von der Nulllage misst. Die von den Wegaufnehmern 4 ermittelten Messdaten werden mittels einer Signalleitung 11 an eine zentrale Erfassungseinheit 7 übermittelt.

Die Empfangseinheit 7 empfängt über Signalleitungen 11 weiterhin die Messwerte eines oder mehrerer Parameter 6 betreffend die aktuelle Fahrstrecke und/oder einen Fahrzustand des Fahrzeugs. Nur beispielhaft sind in Fig. 3 mögliche Signale, die in der Empfangseinheit 7 gesammelt werden, aufgeführt. Diese umfassen die aktuelle Fahrgeschwindigkeit des Fahrzeugs, der aktuelle Lenkwinkel, GPS-Daten, anhand derer der Straßentyp ermittelt werden kann, Beschleunigungsdaten, die beispielsweise mittels Sensoren zur Erfassung der Längs- und Querbeschleunigung erfasst werden oder Messdaten über die Kabinenbewegung.

Die Parameterdaten 6 werden an eine zentrale Steuereinheit 5 übermittelt, die die empfangenen Parameterwerte 6 auswertet.

Die zentrale Steuereinheit 5 ist weiterhin mit einem zentralen Ventilblock 8 über eine Signalleitung 11 zur Steuerung des Ventilblocks 8 verbunden. Der Ventilblock 8 wird über eine Druckleitung 10 mit Druckluft aus einer Druckluftbereitstellungseinheit 9 versorgt. Der Ventilblock 8 ist mit mindestens drei der Federbeine 3 über eine Druckluftleitung 10 direkt verbunden, um das Druckluftniveau in diesen Federbeinen 3 nach Vorgabe des Steuereinheit 5 zu regeln.

Das hintere rechte Federbein 3 wird wahlweise über eine separate Druckluftleitung 10 direkt vom Ventilblock 8 versorgt oder kann alternativ auch nur indirekt über die Druckluftleitung 10a angesteuert werden, die sowohl das hintere linke als auch das hintere rechte Federbein 3 versorgt (illustriert durch die gestrichelten Druckluftleitungen 10a). Letzteres ermöglicht ein weniger genaues Ausgleichen von Abweichungen vom Sollabstand des hinteren linken und hinteren rechten Federbeins, ist jedoch kostengünstiger zu realisieren und führt in der Praxis zu ausreichend guten Ergebnissen.

Die Steuereinheit 5 vereint zwei verschiedene Regelbetriebe. Ein erster Regelbetrieb wertet die an die Steuereinheit 5 übermittelten Parameter 6 betreffend die Fahrstrecke und/oder den Fahrzustand des Fahrzeugs aus. Die Steuereinheit 5 ermittelt oder speichert zusätzlich die aktuelle Höhenposition h1; h2 der Federelemente 3. Die Parameterwerte 6 betreffend die Fahrstrecke und/oder den Fahrzustand legen anhand vorbestimmter Zuordnungen oder Schwellwerte fest, ob die erste (h1) oder die zweite (h2) Höhenposition der gefederten Lagerung eingestellt wird. Überschreitet beispielsweise die Fahrgeschwindigkeit einen vorbestimmten Schwellwert, so werden die Federbeine 3 von ihrer ersten Höhenposition h1 in die zweite Höhenposition h2 (vgl. hierzu Fig. 1) verstellt, falls die Federbeine 3 aktuell auf die erste Höhenposition h1 eingestellt sind.

Hierzu steuert die zentrale Steuereinheit 5 über eine Signalleitung 11 den Ventilblock 8 an, so dass dieser über die Druckleitungen 10 die Höhenposition h1; h2 der Federbeine 8 in die geänderte Höhenposition h1; h2 einstellt. Stellt die Steuereinheit 5 fest, dass die Fahrgeschwindigkeit wieder unter den Schwellwert gefallen ist, so steuert die Steuereinheit 5 den zentralen Ventilblock 8 derart, dass die Federbeine 3 wieder auf die erste Höhenposition h1 zurückgestellt werden. Hierbei wird vorher geprüft, ob eine vorbestimmte Totzeit nach der letzten Höhenänderung der Federbeine 3 vergangen ist, um ein ständiges Hin- und Herschalten zu vermeiden, wenn die Fahrgeschwindigkeit um den vorbestimmten Schwellwert schwankt.

Sowohl in der ersten Höhenposition h1 als auch in der zweiten Höhenposition h2 der Federbeine 3 findet dann ein zweiter Regelbetrieb statt. In diesem zweiten Regelbetrieb überwacht die Steuereinheit 5 über die empfangenen Ausgangssignale der Wegaufnehmer 4, ob das Fahrerhaus 2 parallel zum Chassis 1 ausgerichtet ist und ob der für die jeweilige Höhenposition h1, h2 vorgegebene Sollabstand eingehalten wird.

Wird beispielsweise das vordere linke Federbein 3 durch das Gewicht eines Fahrers zusammengedrückt, wird dies durch den Wegaufnehmer 4, der am vorderen linken Federbein 3 angeordnet ist, durch eine Verkürzung des Abstandes zwischen Fahrerhaus 2 und Chassis 1 registriert. Daraufhin erkennt die Steuereinheit 5 durch Vergleich der gemessenen Werte der Wegaufnehmer 4 der einzelnen Federbeine 3, dass eine leichte Schieflage des Fahrerhauses 2 gegenüber dem Chassis 1 entstanden ist. Folglich steuert die Steuereinheit 5 den Ventilblock 11 so an, dass dieser über diejenige Druckleitung 10, die vom Ventilblock 11 zum vorderen linken Federbein 3 führt, die Höhe des vorderen linken Federbeins 3 wieder auf den Sollabstand der aktuell eingestellten Federhöhe korrigiert.

Die Steuereinheit 5 ist weiter eingerichtet, in regelmäßigen Abständen zu prüfen, ob an allen Federbeinen 3 der für die aktuelle Höhenposition h1; h2 der Federbeine 2 vorgegebene Sollabstand eingehalten wird bzw. ob "normale" Federbewegungen um den vorgegebenen Sollabstand ausgeführt werden. "Normale" Federbewegungen um den vorgegebenen Sollabstand treten im Fahrbetrieb fortlaufend durch Schlaglöcher, Bodenwellen oder schlechte Straßen etc. auf.

Derartige Abweichungen aus dem Sollzustand werden durch den Federmechanismus der Federbeine 3 normalerweise von selbst reduziert, in dem sich das angeregte Federbein 3 wieder in der Nulllage einpendelt. Ist dies bei einem oder mehreren Federbeinen 3 jedoch nicht der Fall, wird dies von der Steuereinheit 5 über die empfangenen Signale der Wegaufnehmer 4 erfasst und wiederum durch entsprechende Ansteuerung des Ventilblocks 8 ausgeglichen, der das entsprechende Druckluftniveau in den betroffenen Federbeinen 3 je nach Bedarf erhöht bzw. erniedrigt.

Es wird bei diesem zweiten "trägen" Regelmechanismus nicht bei jeder Abweichung aus der Solllage unmittelbar durch Zu- oder Abfuhr von Druckluft gegengesteuert, sondern es wird durch Bereitstellen des Steuermittels 5; 13 ein "Ausfedern" ermöglicht und nur bei Bedarf wieder auf den Sollabstand korrigiert. Dies ermöglicht eine effizientere Druckluftsteuerung. Dieser zweite Regelmechanismus ist dem ersten Regelmechanismus zur Einstellung der Federhöhe überlagert.

Fig. 3 illustriert eine weitere Variante eines Ausführungsbeispiels, bei dem, dargestellt durch die gestrichelten Linien, zusätzlich ein vierter Wegaufnehmer 4a am hinteren rechten Federbein 3 angeordnet ist. Dessen Messsignale werden wiederum über eine Datenleitung 11a über die Empfangseinheit 7 an die Steuereinheit 5 übermittelt und dort ausgewertet.

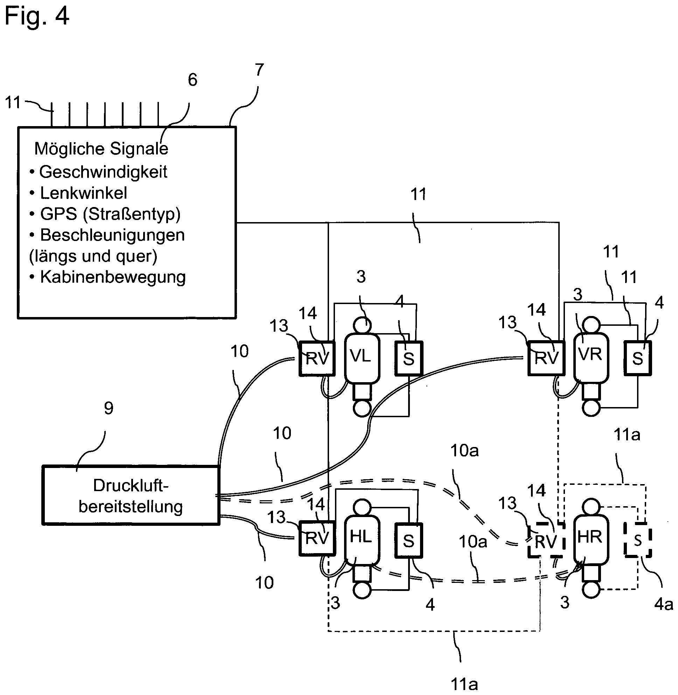

Fig. 4 zeigt ein weiteres Ausführungsbeispiel, das sich von dem in Fig. 3 beschriebenen Ausführungsbeispiel im Wesentlichen dadurch unterscheidet, dass anstelle einer zentralen Steuereinheit 5 jeweils dezentrale Reglerventilkombinationen 13, 14 an den beiden vorderen (VL, VR) Federbeinen 3 und einem der hinteren (HL) Federbeine 3 angeordnet sind, wodurch auf einen zentralen Ventilblock 8 verzichtet werden kann.

Die Reglerventilkombinationen 13, 14 werden über Schlauchleitungen 10 mit Druckluft einer Druckluftbereitstellungseinheit 9 versorgt. Die Regler 13 empfangen die zuvor beschriebenen Signale 6 betreffend die Fahrstrecke oder den Fahrzustand des Nutzfahrzeugs sowie jeweils die Signale des Wegaufnehmers 4, der die Abstandsmessung an dem Federbein 3 des Reglers 13 ausführt.

Die Regler 13 steuern auf Basis der empfangenen Signale direkt ein Ventil 14 am jeweiligen Federbein 3, um den Wegaufnehmer 4 mit Druckluft zu versorgen oder Druckluft aus dem Wegaufnehmer 4 abzulassen. Hierdurch können die zwei unterschiedlichen Regelbetriebe, wie zuvor beschrieben, durch jeden der Regler 13 jeweils separat für ein Federbein 3 realisiert werden: Ergibt die Auswertung der Parameter 6 durch die einzelnen Regler 13, dass eine andere Höhenposition h1; h2 der Federbeine 3 eingestellt werden soll, wird durch Ansteuern der Ventile 14 die neue Höhenposition h1; h2 der Federbeine 3 eingestellt. Dies erfolgt in der Regel durch alle Regler 13 zum selben Zeitpunkt, um die parallele Ausrichtung des Fahrerhauses 2 relativ zum Chassis 1 bei der Abstandsänderung beizubehalten. Weiterhin überwacht der Regler 13 den der Höhenposition h1; h2 entsprechenden Sollabstand der Federbeine 3 und korrigiert das Federbein 3 bei Bedarf auf die vorgegebene Sollabstandshöhe.

Das hintere rechte Federbein 3 wird wahlweise (illustriert durch die gestrichelten Druckluftleitungen 10a) über eine separate Druckluftleitung 10a direkt von der Druckluftbereitstellung 9 versorgt oder kann alternativ auch nur indirekt über die Druckluftleitung 10a angesteuert werden, die sowohl das hintere linke (HL) als auch das hintere rechte (HR) Federbein 3 versorgt. Bei der letzteren Variante steuert der Regler 14 des hinteren linken (HL) Federbeins 3 auch das Druckluftniveau am hinteren rechten (HR) Federbein 3, so dass auf einen separaten Regler 14 am hinteren rechten (HR) Federbein 3 verzichtet werden kann.

Fig. 4 illustriert ebenfalls eine weitere Variante eines Ausführungsbeispiels, bei dem, illustriert durch die gestrichelten Linien, zusätzlich ein vierter Wegaufnehmer 4a am hinteren rechten (HR) Federbein 3 angeordnet ist. Dessen Messsignale werden wiederum über eine Datenleitung 11a an den Regler 14 dieses Federbeins 3 übermittelt und dort ausgewertet.

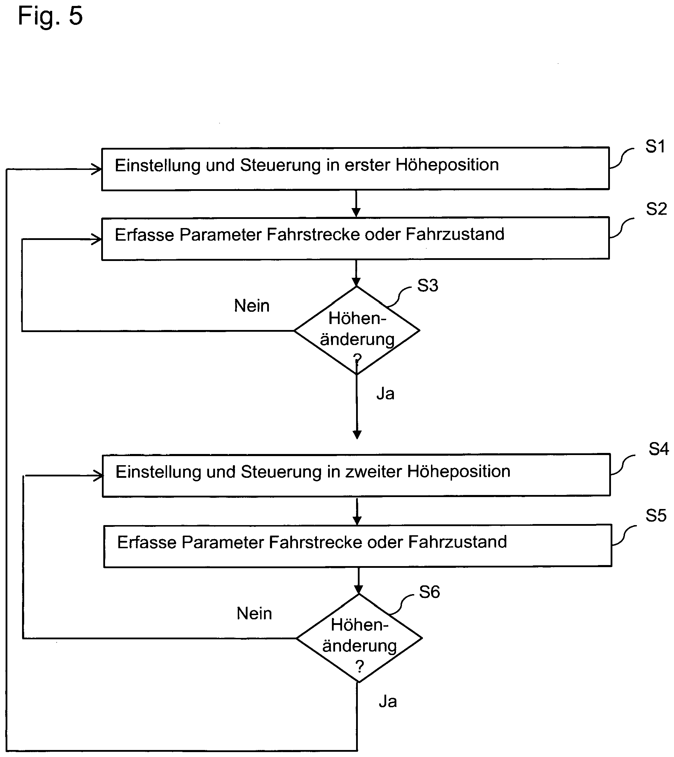

Fig. 5 illustriert beispielhaft ein Betriebsverfahren gemäß einem Ausführungsbeispiel. Im Schritt S1 wird die gefederte Lagerung zwischen Fahrerhaus 2 und Chassis 1 auf eine erste Höheposition eingestellt. In dieser ersten Höheposition h1 hat das Fahrerhaus 2 einen vorgegebenen ersten Sollabstand zum Fahrzeugchassis 1. Mit der zuvor beschriebenen trägen Regelung überprüft das Steuermittel 5;13 in regelmäßigen Abständen, ob der erste Sollabstand von allen Federelementen 3 unter Berücksichtigung des normalen Ausfederns eingehalten wird und steuert bei Abweichungen die einzelnen Federelemente 3 wieder auf den vorgegebenen Sollabstand.

Schritt S2 illustriert, dass fortlaufend die aktuellen Messwerte der Parameter 6 betreffend die Fahrstrecke oder den Fahrzustand erfasst werden. In Schritt S3 wird durch Auswertung der Parameterwerte 6 geprüft, ob ein vorgegebener Schwellwert oder eine vorbestimmte Umschaltbedingung erreicht ist. Falls NEIN, werden die Parameterwerte 6 weiterhin ermittelt und überwacht. Falls JA, bedeutet dies, dass die aktuelle Federhöhe der Federelemente 3 verändert werden soll. Folglich wird in Schritt S4 die Federhöhe auf die zweite Höhenposition h2 eingestellt, so dass ein zweiter Sollabstand zwischen Fahrerhaus 2 und Chassis 1 vorgegeben wird. Im Schritt S5 werden, wie im Schritt S2, fortlaufend die aktuellen Messwerte der Parameter 6 betreffend die Fahrstrecke oder den Fahrzustand erfasst und im Schritt S6 wird dann anhand der Messwerte der Fahrzustands- und Fahrstreckenparameter 6 entschieden, ob die zweite Höhenposition h2 der Federelemente 3 beibehalten werden soll oder ob wieder auf die erste Höhenposition h1 zurückgewechselt wird. In diesem Fall beginnt der Regelungskreis wieder von neuem bei Schritt S1.

Die einzelnen Merkmale der Erfindung, die durch die beigefügten Ansprüche definiert sind, sind selbstverständlich nicht auf die beschriebenen Kombinationen von Merkmalen im Rahmen der vorgestellten Ausführungsbeispiele beschränkt. Dies trifft insbesondere auf die Kombinationen der Parameter betreffend die Fahrstrecke und den Fahrzustand des Nutzfahrzeugs zu, die in Abhängigkeit vorhandener Fahrzeugsensorik auch in verschiedenen Kombinationen eingesetzt werden können, um eine Funktionsgröße zu ermitteln, aus der sich ableiten lässt, ob der Federungsbedarf aufgrund der aktuellen Fahrumstände aktuell erhöht oder erniedrigt ist bzw. ob aufgrund der aktuellen Fahrsituation, z.B. hohe Geschwindigkeit, eine Absenkung der Federhöhe zur Reduzierung des c_{W}-Werts besonders vorteilhaft ist.

### Bezugszeichenliste

- 1: Fahrzeugchassis
- 2: Fahrerhaus
- 3: Feder
- 4, 4a: Wegaufnehmer
- 5: Steuereinheit
- 6: Parameter betreffend eine Fahrstrecke und/oder einen Fahrzustand des Nutzfahrzeugs
- 7: Erfassungseinheit
- 8: Ventilblock
- 9: Druckluftbereitstellungseinheit
- 10, 10a: Druckluftleitung
- 11, 11a: Signalleitung
- 13: Regler
- 14: Ventil
- h1: Erste Höhenposition
- h2: Zweite Höhenposition

## Patentansprüche

1. System zur Niveauregelung eines Fahrerhauses (2) eines Nutzfahrzeugs gegenüber einem Fahrzeugchassis (1), umfassend eine gefederte Lagerung, um das Fahrerhaus (2) federnd auf dem Fahrzeugchassis (1) zu lagern; ein Abstandssensormittel, das eingerichtet ist, Relativbewegungen und/oder einen Abstand zwischen Fahrerhaus (2) und Fahrzeugchassis (1) zu erfassen; ein Steuermittel (5; 13), das zur variablen Ansteuerung der gefederten Lagerung eingerichtet ist, wobei Signale des Abstandssensormittels zur Ansteuerung der gefederten Lagerung verwendet werden; wobei die gefederte Lagerung
(a) auf eine erste Höhenposition (h1) einstellbar ist, so dass der Abstand zwischen Fahrerhaus (2) und Fahrzeugchassis (1) durch das Steuermittel (5; 13) auf einen ersten Sollabstand gesteuert wird, und
(b) auf zumindest eine zweite Höhenposition (h2) einstellbar ist, so dass der Abstand zwischen Fahrerhaus (2) und Fahrzeugchassis (1) durch das Steuermittel (5; 13) auf einen zweiten Sollabstand gesteuert wird,
**dadurch gekennzeichnet, dass**
das Steuermittel (5; 13) die gefederte Lagerung auf die erste (h1) und/oder auf die zumindest eine zweite (h2) Höhenposition in Abhängigkeit von zumindest einem Parameter (6) betreffend eine Fahrstrecke des Nutzfahrzeugs einstellt, wobei der zumindest eine Parameter (6) betreffend die Fahrstrecke den Straßentyp umfasst, der anhand von GPS-Daten ermittelt wird.

2. System nach Anspruch 1, **dadurch gekennzeichnet, dass** das Steuermittel (5; 13) die gefederte Lagerung auf die erste (h1) und/oder auf die zumindest eine zweite (h2) Höhenposition in Abhängigkeit von zumindest einem Parameter (6) betreffend einen Fahrzustand des Nutzfahrzeugs einstellt.

3. System nach Anspruch 2, wobei der zumindest eine Parameter (6) betreffend den Fahrzustand des Nutzfahrzeugs zumindest eine Fahrgeschwindigkeit umfasst.

4. System nach Anspruch 3, wobei das Steuermittel (5; 13) eingerichtet ist, den Abstand zwischen Fahrerhaus (2) und Fahrzeugchassis (1) nach Überschreiten eines vorbestimmten Schwellwerts der Fahrgeschwindigkeit auf den zweiten Sollabstand zu regeln, derart, dass der zweite Sollabstand kleiner als der erste Sollabstand ist und ein Federweg der gefederten Lagerung in der zweiten Höhenposition (h2) kleiner als der Federweg in der ersten Höhenposition (h1) ist.

5. System nach einem der Ansprüche 2 bis 4, wobei der zumindest eine Parameter (6) betreffend den Fahrzustand des Nutzfahrzeugs eine Lenkaktivität, eine Querbeschleunigung, eine Längsbeschleunigung des Nutzfahrzeugs und/oder eine Bewegung des Fahrerhauses (2) umfasst.

6. System nach einem der vorhergehenden Ansprüche, wobei der erste Sollabstand der ersten Höhenposition (h1) größer als der zweite Sollabstand der zweiten Höhenposition (h2) ist, und ein Federweg der gefederten Lagerung in der ersten Höhenposition (h1) größer als der Federweg in der zweiten Höhenposition (h2) ist.

7. System nach einem der vorhergehenden Ansprüche, wobei die gefederte Lagerung umfasst: mehrere pneumatische und/oder hydraulische Federelemente (3), einen zentralen Ventilblock (8) zur variablen Versorgung der Federelemente (3) mit einem druckerzeugenden Medium und eine Bereitstellungseinheit (9), die dem Ventilblack (8) das druckerzeugende Medium bereitstellt; wobei das Steuermittel als zentrale Steuereinheit (5) ausgebildet ist und eingerichtet ist, das Druckniveau eines der Federelemente (3), das nicht auf den eingestellten Sollabstand einfedert, über den zentralen Ventilblock (8) derart zu regeln, dass dieses Federelement (3) auf den eingestellten Sollabstand einfedert.

8. System nach einem der vorhergehenden Ansprüche, wobei die gefederte Lagerung umfasst: mehrere pneumatische und/oder hydraulische Federelemente (3) mit jeweils einem Ventil (14) zur variablen Versorgung der Federelemente (3) mit einem druckerzeugenden Medium, und eine Bereitstellungseinheit (9), die das druckerzeugende Medium für die Federelemente bereitstellt; wobei das Steuermittel als dezentrales Steuermittel ausgebildet ist, mit an den Ventilen angeordneten Reglern (13), wobei, falls eines der Federelemente (3) nicht auf den eingestellten Sollabstand einfedert, der Regler (13) des Federelements (3) über das am Regler (13) angeordnete Ventil (14) das Niveau des Druckmediums des Federelements (3) so steuert, dass dieses Federelement (3) wieder auf den eingestellten Sollabstand einfedert.

9. System nach einem der vorhergehenden Ansprüche, wobei das Abstandssensormittel drei Wegaufnehmer (4) und die gefederte Lagerung vier mit Druckluft betriebene Federbeine (3) umfasst, wobei jeweils einer der drei Wegaufnehmer (4) an einem der Federbeine (3) zur Abstandsmessung angeordnet ist.

10. System nach einem der vorhergehenden Ansprüche 4 bis 9, wobei das Steuermittel (5; 13) eingerichtet ist, den Abstand zwischen Fahrerhaus (2) und Fahrzeugchassis (1) nach Unterschreiten des vorbestimmten Schwellwerts der Fahrgeschwindigkeit auf den ersten Sollabstand zurückzuregeln, wobei nur dann auf den ersten Sollabstand zurückgesteuert wird, wenn nach dem vorherigen Überschreiten des Schwellwerts oder der Regelung auf den zweiten Sollabstand eine vorbestimmte Totzeit vergangen ist.

11. Nutzfahrzeug, vorzugsweise Lastkraftwagen oder Omnibus, umfassend das System nach einem der vorhergehenden Ansprüche.

12. Betriebsverfahren zur Niveauregefung eines Fahrerhauses (2) eines Nutzfahrzeugs gegenüber einem Fahrzeugchassis (1), umfassend die Schritte:
Erfassen einer Relativbewegung und/oder eines Abstandes zwischen dem Fahrerhaus (2) und dem Fahrzeugchassis (1); Einstellen einer gefederten Lagerung, die das Fahrerhaus (2) federnd auf dem Fahrzeugchassis (1) lagert, auf eine erste Höhenposition (h1) und Steuerung des Abstands zwischen Fahrerhaus (2) und Fahrzeugchassis (1) auf zumindest einen ersten Sollabstand, wobei die erfasste Relativbewegung und/oder der Abstand zwischen dem Fahrerhaus (2) und dem Fahrzeugchassis (1) zur Steuerung auf den ersten Sollabstand verwendet wird; Einstellen der gefederten Lagerung auf zumindest eine zweite Höhenposition (h2) und Regelung des Abstands zwischen Fahrerhaus (2) und Fahrzeugchassis (1) auf zumindest einen zweiten Sollabstand, wobei die erfasste Relativbewegung und/oder der Abstand zwischen dem Fahrerhaus (2) und dem Fahrzeugchassis (1) zur Steuerung auf den zweiten Sollabstand verwendet wird;
**dadurch gekennzeichnet, dass** das Einstellen der gefederten Lagerung auf die erste (h1) oder auf die zumindest eine zweite (h2) Höhenposition in Abhängigkeit zumindest eines Parameters (6) betreffend eine Fahrstrecke des Nutzfahrzeugs erfolgt, wobei der zumindest eine Parameter (6) betreffend die Fahrstrecke den Straßentyp umfasst, der anhand von GPS-Daten ermittelt wird.

## Claims

1. System for level regulation of a driver's cab (2) of a commercial vehicle relative to a vehicle chassis (1), comprising a spring-loaded bearing for supporting the driver's cab (2) on the vehicle chassis (1) in a sprung manner; a distance sensor means that is arranged to record relative movements and/or a distance between the driver's cab (2) and the vehicle chassis (1); a control means (5; 13) that is arranged for variable control of the spring-loaded bearing, wherein signals of the distance sensor means are used to control the spring-loaded bearing; wherein the spring-loaded bearing
(a) can be adjusted to a first height position (h1), so that the distance between the driver's cab (2) and the vehicle chassis (1) is controlled by the control means (5; 13) to a first target distance, and
(b) can be adjusted to at least one second height position (h2), so that the distance between the driver's cab (2) and the vehicle chassis (1) is controlled by the control means (5; 13) to a second target distance,
**characterized in that**
the control means (5; 13) adjusts the spring-loaded bearing to the first (h1) and/or to the at least one second (h2) height position depending on at least one parameter (6) relating to a driving route of the commercial vehicle, wherein the at least one parameter (6) relating to the driving route includes the type of road, which is determined by means of GPS data.

2. System according to Claim 1, **characterized in that** the control means (5; 13) adjusts the spring-loaded bearing to the first (h1) and/or to the at least one second (h2) height position depending on at least one parameter (6) relating to a driving state of the commercial vehicle.

3. System according to Claim 2, wherein the at least one parameter (6) relating to the driving state of the commercial vehicle includes at least one speed of travel.

4. System according to Claim 3, wherein the control means (5; 13) is arranged to regulate the distance between the driver's cab (2) and the vehicle chassis (1) to the second target distance after exceeding a predetermined threshold value of the speed of travel, such that the second target distance is smaller than the first target distance and a spring travel of the spring-loaded bearing in the second height position (h2) is smaller than the spring travel in the first height position (h1).

5. System according to any one of Claims 2 to 4, wherein the at least one parameter (6) relating to the driving state of the commercial vehicle includes a steering activity, a lateral acceleration, a longitudinal acceleration of the commercial vehicle and/or a movement of the driver's cab (2).

6. System according to any one of the preceding claims, wherein the first target distance of the first height position (h1) is greater than the second target distance of the second height position (h2), and a spring travel of the spring-loaded bearing in the first height position (h1) is greater than the spring travel in the second height position (h2).

7. System according to any one of the preceding claims,
wherein the spring-loaded bearing comprises:
a plurality of pneumatic and/or hydraulic spring elements (3), a central valve block (8) for variable supply of the spring elements (3) with a pressure-generating medium and a supply unit (9) that supplies the valve block (8) with the pressure-generating medium;
wherein the control means is designed as a central control unit (5) and is arranged to regulate the pressure level of one of the spring elements (3), which is not compressed to the adjusted target distance, by means of the central valve block (8) such that said spring element (3) is compressed to the adjusted target distance.

8. System according to any one of the preceding claims,
wherein the spring-loaded bearing comprises:
a plurality of pneumatic and/or hydraulic spring elements (3), each with a valve (14) for variable supply of the spring elements (3) with a pressure-generating medium, and a supply unit (9) that supplies the pressure-generating medium for the spring elements;
wherein the control means is designed as a distributed control means with regulators (13) disposed on the valves, wherein, if one of the spring elements (3) is not compressed to the adjusted target distance, the regulator (13) of the spring element (3) controls the level of the pressure medium of the spring element (3) by means of the valve (14) disposed on the regulator (13) such that said spring element (3) is again compressed to the adjusted target distance.

9. System according to any one of the preceding claims, wherein the distance sensor means comprises three displacement transducers (4) and the spring-loaded bearing comprises four spring struts (3) operated by compressed air, wherein each one of the three displacement transducers (4) is disposed on one of the spring struts (3) for distance measurement.

10. System according to any one of the preceding Claims 4 to 9, wherein the control means (5; 13) is arranged to regulate the distance between the driver's cab (2) and the vehicle chassis (1) back to the first target distance after falling below the predetermined threshold value of the speed of travel, wherein it will only be controlled back to the first target distance if a predetermined delay time has elapsed following the previous instance of falling below the threshold value or regulation to the second target distance.

11. Commercial vehicle, preferably truck or omnibus, comprising the system according to any one of the preceding claims.

12. Operating method for level regulation of a driver's cab (2) of a commercial vehicle relative to a vehicle chassis (1), comprising the steps:
recording a relative movement and/or a distance between the driver's cab (2) and the vehicle chassis (1); adjusting a spring-loaded bearing, which supports the driver's cab (2) in a sprung manner on the vehicle chassis (1), to a first height position (h1) and controlling the distance between the driver's cab (2) and the vehicle chassis (1) to at least one first target distance, wherein the recorded relative movement and/or the distance between the driver's cab (2) and the vehicle chassis (1) is used to control to the first target distance; adjusting the spring-loaded bearing to at least one second height position (h2) and regulating the distance between the driver's cab (2) and the vehicle chassis (1) to at least one second target distance, wherein the recorded relative movement and/or the distance between the driver's cab (2) and the vehicle chassis (1) is used to control to the second target distance;
**characterized in that** wherein the adjustment of the spring-loaded bearing to the first (h1) or to the at least one second (h2) height position takes place depending on at least one parameter (6) relating to a driving route of the commercial vehicle, wherein the at least one parameter (6) relating to the driving route includes the type of road, which is determined by means of GPS data.

## Revendications

1. Système pour la régulation du niveau d'une cabine de conducteur (2) d'un véhicule utilitaire par rapport à un châssis du véhicule (1), comprenant une suspension élastique, destinée à supporter élastiquement la cabine de conducteur (2) sur le châssis du véhicule (1); un moyen de détection de distance, qui est conçu pour détecter des mouvements relatifs et/ou une distance entre la cabine de conducteur (2) et le châssis du véhicule (1); un moyen de commande (5; 13), qui est conçu pour la commande variable de la suspension élastique, dans lequel on utilise des signaux du moyen de détection de distance pour la commande de la suspension élastique; dans lequel la suspension élastique
(a) est réglable à une première position en hauteur (h1), de telle manière que la distance entre la cabine de conducteur (2) et le châssis du véhicule (1) soit commandée à une première distance de consigne au moyen du moyen de commande (5; 13), et
(b) est réglable à au moins une deuxième position en hauteur (h2), de telle manière que la distance entre la cabine de conducteur (2) et le châssis du véhicule (1) soit commandée à une deuxième distance de consigne au moyen du moyen de commande (5; 13),
**caractérisé en ce que** le moyen de commande (5; 13) règle la suspension élastique à la première (h1) et/ou à ladite au moins une deuxième (h2) position en hauteur en fonction d'au moins un paramètre (6) concernant un itinéraire du véhicule, dans lequel ledit au moins un paramètre (6) concernant l'itinéraire comprend le type de route, que l'on détermine à l'aide de données GPS.

2. Système selon la revendication 1, **caractérisé en ce que** le moyen de commande (5; 13) règle la suspension élastique à la première (h1) et/ou à ladite au moins une deuxième (h2) position en hauteur en fonction d'au moins un paramètre (6) concernant un état de roulage du véhicule utilitaire.

3. Système selon la revendication 2, dans lequel ledit au moins un paramètre (6) concernant un état de roulage du véhicule utilitaire comprend au moins une vitesse de roulage.

4. Système selon la revendication 3, dans lequel le moyen de commande (5; 13) est conçu pour réguler la distance entre la cabine de conducteur (2) et le châssis du véhicule (1) à la deuxième distance de consigne après dépassement d'une valeur de seuil prédéterminée de la vitesse de roulage, de telle manière que la deuxième distance de consigne soit plus petite que la première distance de consigne et qu'une course élastique de la suspension élastique dans la deuxième position en hauteur (h2) soit plus petite que la course élastique dans la première position en hauteur (h1).

5. Système selon l'une quelconque des revendications 2 à 4, dans lequel ledit au moins un paramètre (6) concernant l'état de roulage du véhicule utilitaire comprend une action de direction, une accélération transversale, une accélération longitudinale du véhicule utilitaire et/ou un mouvement de la cabine de conducteur (2).

6. Système selon l'une quelconque des revendications précédentes, dans lequel la première distance de consigne de la première position en hauteur (h1) est plus grande que la deuxième distance de consigne de la deuxième position en hauteur (h2), et une course élastique de la suspension élastique dans la première position en hauteur (h1) est plus grande que la course élastique dans la deuxième position en hauteur (h2).

7. Système selon l'une quelconque des revendications précédentes, dans lequel la suspension élastique comprend: plusieurs éléments de suspension pneumatiques et/ou hydrauliques (3), un bloc de soupapes central (8) pour l'alimentation variable des éléments de suspension (3) avec un fluide générateur de pression et une unité de fourniture (9), qui fournit au bloc de soupapes (8) le fluide générateur de pression; dans lequel le moyen de commande est réalisé sous la forme d'une unité de commande centrale (5) et est conçu pour réguler le niveau de pression d'un des éléments de suspension (3), qui ne se déplace pas à la distance de consigne réglée, au moyen du bloc de soupapes central (8), de telle manière que cet élément de suspension (3) se déplace à la distance de consigne réglée.

8. Système selon l'une quelconque des revendications précédentes, dans lequel la suspension élastique comprend: plusieurs éléments de suspension pneumatiques et/ou hydrauliques (3) avec chaque fois une soupape (14) pour l'alimentation variable des éléments de suspension (3) avec un fluide générateur de pression, et une unité de fourniture (9), qui fournit le fluide générateur de pression pour les éléments de suspension; dans lequel le moyen de commande est réalisé sous la forme d'un moyen de commande décentralisé, avec des régulateurs (13) disposés sur les soupapes, dans lequel, dans le cas où un des éléments de suspension (3) ne se déplace pas à la distance de consigne réglée, le régulateur (13) de l'élément de suspension (3) commande par l'intermédiaire de la soupape (14) disposée sur le régulateur (13) le niveau du fluide comprimé de l'élément de suspension (3), de telle manière que cet élément de suspension (3) se déplace de nouveau à la distance de consigne réglée.

9. Système selon l'une quelconque des revendications précédentes, dans lequel le moyen de détection de distance comprend trois enregistreurs de course (4) et la suspension élastique comprend quatre jambes de force à ressort (3) opérant à l'air comprimé, dans lequel un des trois enregistreurs de course (4) est respectivement disposé sur une des jambes de force à ressort (3) pour la mesure de la distance.

10. Système selon l'une quelconque des revendications précédentes 4 à 9, dans lequel le moyen de commande (5; 13) est conçu pour régler de nouveau la distance entre la cabine de conducteur (2) et le châssis du véhicule (1) à la première distance de consigne en cas de descente en dessous de la valeur de seuil prédéterminée de la vitesse de roulage, lorsqu'un temps mort prédéterminé s'est écoulé après le dépassement précédent de la valeur de seuil ou la régulation à la deuxième distance de consigne.

11. Véhicule utilitaire, de préférence camion ou autobus, comprenant le système selon l'une quelconque des revendications précédentes.

12. Procédé de fonctionnement pour la régulation du niveau d'une cabine de conducteur (2) d'un véhicule utilitaire par rapport à un châssis du véhicule (1), comprenant les étapes suivantes:
détecter un mouvement relatif et/ou une distance entre la cabine de conducteur (2) et le châssis du véhicule (1); régler la suspension élastique, qui supporte la cabine de conducteur (2) élastiquement sur le châssis du véhicule (1), à une première position en hauteur (h1) et commander la distance entre la cabine de conducteur (2) et le châssis du véhicule (1) à au moins une première distance de consigne, dans lequel on utilise le mouvement relatif détecté et/ou la distance entre la cabine de conducteur (2) et le châssis du véhicule (1) pour la commande à la première distance de consigne; régler la suspension élastique à au moins une deuxième position en hauteur (h2) et réguler la distance entre la cabine de conducteur (2) et le châssis du véhicule (1) à au moins une deuxième distance de consigne, dans lequel on utilise le mouvement relatif détecté et/ou la distance entre la cabine de conducteur (2) et le châssis du véhicule (1) pour la commande à la deuxième distance de consigne,
**caractérisé en ce que** l'on effectue le réglage de la suspension élastique à la première (h1) ou à ladite au moins une deuxième (h2) position en hauteur en fonction d'au moins un paramètre (6) concernant un itinéraire du véhicule utilitaire, dans lequel ledit au moins un paramètre (6) concernant l'itinéraire comprend le type de route, que l'on déterminé à l'aide de données GPS.
